# EUROPEAN PATENT APPLICATION

(11) **EP 3 783 539 A1**
(43) Date of publication of application: **24.02.2021**
(21) Application number: 19216547.0
(22) Date of filing: 16.12.2019
(51) Int. Cl.: G06N 3/04, G06N 3/08

(54) **SUPERNET CONSTRUCTION METHOD, USING METHOD, APPARATUS AND MEDIUM**

(30) Priority: 19.08.2019 CN 201910763113
(71) Applicant: Beijing Xiaomi Intelligent Technology Co., Ltd., Beijing 100085 (CN)
(72) Inventor: CHU, Xiangxiang, Beijing, Beijing 100085 (CN); XU, Ruijun, Beijing, Beijing 100085 (CN); ZHANG, Bo, Beijing, Beijing 100085 (CN); LI, Jixiang, Beijing, Beijing 100085 (CN); LI, Qingyuan, Beijing, Beijing 100085 (CN); WANG, Bin, Beijing, Beijing 100085 (CN)
(74) Representative: dompatent von Kreisler Selting Werner - Partnerschaft von Patent- und Rechtsanwälten mbB

(57) **Abstract**

A supernet construction method includes: setting (41) a linear connection unit in at least one layer of a supernet, wherein an input end of the linear connection unit is connected to an upper layer of a home layer of the linear connection unit, and an output end is connected to a lower layer of the home layer of the linear connection unit; an output and an input of the linear connection unit form a linear relationship, where the linear relationship includes a linear relationship other than that the output is equal to the input.

## Description

### TECHNICAL FIELD

The present disclosure relates to the field of data processing technology, and in particular, to a supernet construction method, a using method, an apparatus and a medium.

### BACKGROUND

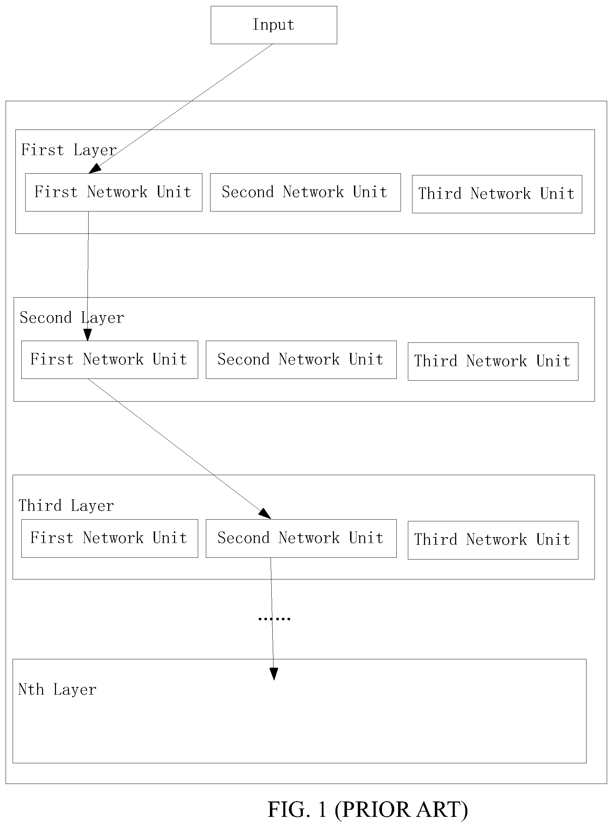

Neural Architecture Search (NAS) is a technology that automatically designs neural networks. It can automatically design high-performance network structures based on sample sets. In the neural network architecture search, it may be necessary to search multiple times to generate a separate neural network and obtain the network indicators through training, which has the problems of low evaluation efficiency and low search speed. To solve this problem, some NAS methods use a supernet that includes all search networks. In an example supernet structure as showing in FIG. 1, the supernet includes multiple layers, each layer includes multiple network units, and one network unit from each layer is selected to connect in turn to form a sub-network. When training a supernet, all sub-network structures inside the supernet share the parameters when constructing different sub-networks. It is possible to sample and evaluate the sub-networks only after training the supernet to a certain extent. There is no need to train each sub-network from the beginning. This algorithm is called a neural network supernet single path activation algorithm.

### SUMMARY

Accordingly, the disclosure provides a supernet construction method, a using method, an apparatus and a medium , in accordance with claims which follow..

According to the first aspect of the embodiments disclosed herein, a supernet construction method is provided, the method includes:
setting a linear connection unit in at least one layer of a supernet, where an input end of the linear connection unit is connected to an upper layer of a home layer of the linear connection unit, and an output end is connected to a lower layer of the home layer of the linear connection unit; where an output and an input of the linear connection unit form a linear relationship, the linear relationship includes a linear relationship other than that the output is equal to the input.

The above described supernet construction method further has the following characteristics:
the method further includes: setting linear parameters of each linear connection unit in the supernet;
the setting each linear parameter of each linear connection unit in the supernet includes one of the following modes:
setting the linear parameters of all the linear connection units in the supernet to constants;
setting the linear parameters of a part of the linear connection units in the supernet to constants, and the linear parameters of the other linear connection units as variables;
setting the linear parameters of all the linear connection units in the supernet as variables.

The above described supernet construction method further has the following characteristics:
the linear parameters include at least one of the following parameters: slope, first coordinate axis displacement and second coordinate axis displacement.

According to the second aspect of the embodiments disclosed herein, a supernet using method is provided, including:
setting a linear connection unit in at least one layer of a supernet, where an input end of the linear connection unit is connected to an upper layer of a home layer of the linear connection unit, and an output end is connected to a lower layer of the home layer of the linear connection unit;
determining N sub-networks according to the supernet, and performing training process on each sub-network of the N sub-networks until a corresponding training end condition is met;
determining M sub-networks in the N sub-networks;
for a sub-network including the linear connection unit in the M sub-networks, modifying a linear relationship of the linear connection unit in the sub-network including the linear connection unit to a relationship that an output is equal to an input;
performing separate training on each sub-network of the M sub-networks, and extracting performance indicators of each sub-network after the training ends;
N and M are integers greater than 1, and M is less than or equal to N.

The above described supernet using method further has the following characteristics:
determining M sub-networks in the N sub-networks includes: calculating the network indicators of the N sub-networks, and selecting M sub-networks with the highest quality index of the network indicators from the N sub-networks.

The above described supernet using method further has the following characteristics:
the method further includes: setting linear parameters of each linear connection unit in the supernet;
the setting each linear parameter of each linear connection unit in the supernet includes one of the following modes:
setting the linear parameters of all the linear connection units in the supernet to constants;
setting the linear parameters of a part of the linear connection units in the supernet to constants, and the linear parameters of the other linear connection units as variables;
setting the linear parameters of all the linear connection units in the supernet as variables.

The above described supernet using method further has the following characteristics:
the method further includes: when the actual value of the linear parameters of the linear connection unit are variables, the linear parameters of each linear connection unit are updated while training each sub-network of the N sub-networks.

The above described supernet using method further has the following characteristics:
the linear parameters include at least one of the following parameters: slope, first coordinate axis displacement and second coordinate axis displacement.

According to the third aspect of the embodiment herein, a supernet construction apparatus is provided, including:
a first setting module, configured to set a linear connection unit in at least one layer of a supernet, an input end of the linear connection unit is connected to an upper layer of a home layer of the linear connection unit, and an output end is connected to a lower layer of the home layer of the linear connection unit; wherein an output and an input of the linear connection unit forms a linear relationship, the linear relationship includes a linear relationship other than that the output is equal to the input.

The above described supernet construction apparatus further has the following characteristics:
the apparatus further includes:
a second setting module, configured to set the linear parameters of each linear connection units in the supernet;
the setting each linear parameter of each linear connection unit in the supernet includes one of the following modes:
setting the linear parameters of all the linear connection units in the supernet to constants;
setting the linear parameters of a part of the linear connection units in the supernet to constants, and the linear parameters of the other linear connection units as variables;
setting the linear parameters of all the linear connection units in the supernet as variables.

The above described supernet construction apparatus further has the following characteristics:
the linear parameters include at least one of the following parameters: slope, first coordinate axis displacement and second coordinate axis displacement.

According to the fourth aspect of the embodiment herein, a supernet using apparatus is provided, including:
a third setting module, configured to set a linear connection unit in at least one layer of the supernet, an input end of the linear connection unit is connected to an upper layer of a home layer of the linear connection unit, and an output end is connected to a lower layer of the home layer of the linear connection unit; an output and an input of the linear connection unit form a linear relationship;
a first determining module, configured to determine N sub-networks according to the supernet;
a first training module, configured to perform training process on each sub-network of the N sub-networks until a corresponding training end condition is met;
a second determining module, configured to determine M sub-networks in the N sub-network;
a modifying module, configured to, for a sub-network including the linear connection unit in the M sub-networks, modify a linear relationship of the linear connection units in the sub-network including the linear connection unit to a relationship that an output is equal to an input;
a second training module, configured to perform separate training on each sub-network of the M sub-networks, and extract performance indicators of each sub-network after the training ends;
N and M are integers greater than 1, and M is less than or equal to N.

The above described supernet using apparatus further has the following characteristics:
the second determining module includes:
a calculation module, configured to calculate the network indicators of the N sub-networks;
a selection module, configured to select, from the N sub-networks, the M sub-networks with the highest quality index of the network indicators.

The above described supernet using apparatus further has the following characteristics:
the apparatus further includes a fourth setting module, the fourth setting module configured to set the linear parameters of each linear connection units in the supernet;
the setting each linear parameter of each linear connection unit in the supernet includes one of the following modes:
setting linear parameters of all the linear connection units in the supernet to constants;
setting linear parameters of a part of the linear connection units in the supernet to constants, and the linear parameters of the other linear connection units as variables;
setting linear parameters of all the linear connection units in the supernet as variables.

The above described supernet using apparatus further has the following characteristics:
the first training module is further configured to, when the actual value of the linear parameter of the linear connection unit is a variable, update the linear parameters of each linear connection unit while training each sub-network of the N sub-networks.

The above described supernet using apparatus further has the following characteristics:
the linear parameters include at least one of the following parameters: slope, first coordinate axis displacement and second coordinate axis displacement.

According to the fifth aspect of the embodiments disclosed herein, a non-transitory computer readable storage medium is provided, where when instructions in the storage medium are executed by a processor of a mobile terminal, enabling the mobile terminal to perform a supernet construction method, the method including:
setting a linear connection unit in at least one layer of a supernet, where an input end of the linear connection unit is connected to an upper layer of a home layer of the linear connection unit, and an output end is connected to a lower layer of the home layer of the linear connection unit; an output and an input of the linear connection unit form a linear relationship;

According to the sixth aspect of the embodiments disclosed herein, a non-transitory computer readable storage medium is provided, where when instructions in the storage medium are executed by a processor of a mobile terminal, enabling the mobile terminal to perform a supernet using method, the method including:
setting a linear connection unit in at least one layer of a supernet, where an input end of the linear connection unit is connected to an upper layer of a home layer of the linear connection unit, and an output end is connected to a lower layer of the home layer of the linear connection unit;
determining N sub-networks according to the supernet, and performing training on each sub-network of the N sub-networks until a corresponding training end condition is met;
determining M sub-networks in the N sub-networks;
for a sub-network including the linear connection unit in the M sub-networks, modifying a linear relationship of the linear connection unit in the sub-network including the linear connection unit to a relationship that an output is equal to an input;
performing separate training on each sub-network of the M sub-networks, and extracting performance indicators of each sub-network after the training ends;
N and M are integers greater than 1, and M is less than or equal to N.

According to a seventh aspect of the embodiment of the present disclosure, there is provided a computer program which, when being executed on a processor of an apparatus, performs any one of the above methods

The technical solutions provided by the embodiments herein may include the following beneficial effects: the present method uses a linear connection unit, compared with the use of the direct-connected unit, the representation capability of the sub-network can be effectively improved, the stability of the network indicators of the sub-network including the linear connection unit in the super network is maintained, and the network indicators of the sub-network is prevented from decreasing rapidly after a network unit in one or more layers in the original sub-network is replaced with a direct-connected unit.

It should be understood that the above general description and the following detailed description are exemplary and explanatory, and should not limit the present disclosure.

### BRIEF DESCRIPTION OF THE DRAWINGS

The accompanying drawings herein are incorporated into the specification and form a part of the present disclosure. The embodiments conforming to the present disclosure are showing and used to explain the principles of the present disclosure in conjunction with the specification.
FIG. 1 is a structure diagram showing a supernet according to some embodiments;
FIG. 2 is a structure diagram showing a supernet according to some embodiments;
FIG. 3 is a structure diagram showing a supernet according to some embodiments;
FIG. 4 is a flowchart showing a construction method of a supernet according to some embodiments;
FIG. 5 is a flowchart showing a using method of a supernet according to some embodiments;
FIG. 6 is a block diagram showing a construction apparatus of a supernet according to some embodiments;
FIG. 7 is a block diagram showing a using apparatus of a supernet according to some embodiments;
FIG. 8 is a block diagram showing a construction apparatus or a using apparatus of a supernet according to some embodiments.

### DETAILED DESCRIPTION

Exemplary embodiments will be described in detail herein, examples of which are illustrated in the accompanying drawings. When the following description refers to the accompanying drawings, unless there is otherwise indicating, the same numbers in different accompanying drawings indicate the same or similar elements. The embodiments described in the following exemplary embodiments do not represent all embodiments consistent with the present disclosure. Instead, they are merely examples of apparatuses and methods consistent with some aspects of the disclosure and as detailed in the appended claims.

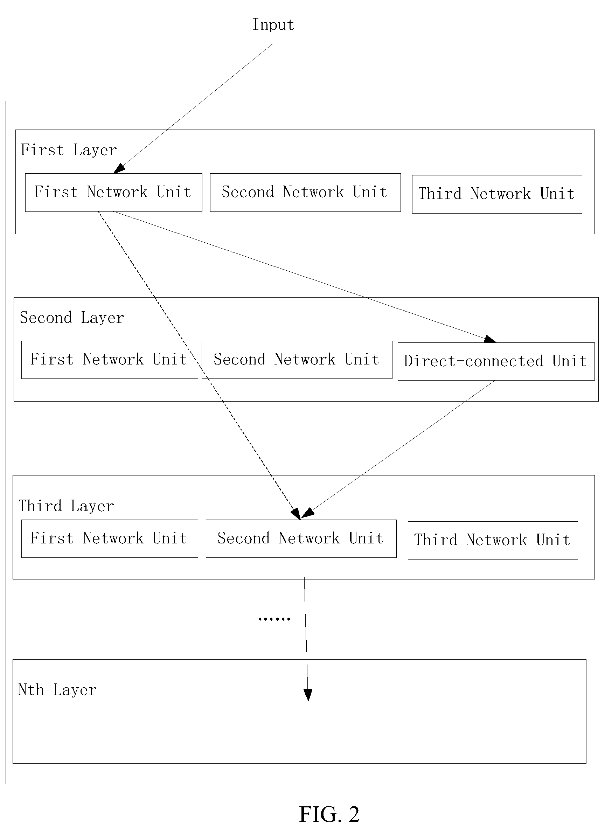

In order to obtain a richer sub-network structure through a supernet, a direct-connected unit is introduced in the supernet to construct a network with variable depth. As showing in FIG. 2, a direct-connected unit is set in the second layer of the supernet, and the function of the direct-connected unit is to make the output equal the input of the direct-connected unit. When the direct-connected unit is used to connect the first sub-network in the first layer and the second sub-network in the third layer, in this connection mode, the direct-connection between the first layer and the third layer in the structure of the supernet is realized. When a direct-connected unit is added in the original supernet, after the network unit in one or more layers of the original sub-network is replaced by the direct-connected unit, the network indicators of the sub-network will rapidly decrease, which seriously affects the stability of the network indicators of the sub-network.

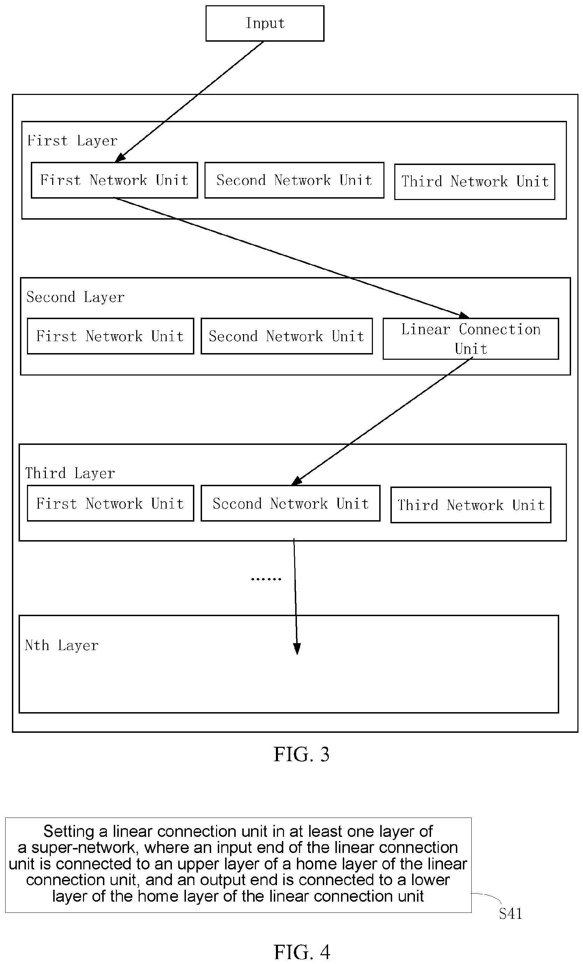

In order to solve this problem, as showing in FIG. 3, the direct-connected unit is replaced with a linear connection unit herein.

FIG. 4 is a flow chart showing a method of constructing a supernet according to some embodiments. The method includes: in step S41, a linear connection unit is set in at least one layer of the supernet, an input end of the linear connection unit is connected to an upper layer of the home layer of the linear connection unit, and an output end is connected to a lower layer of the home layer of the linear connection unit; the output and the input of the linear connection unit form a linear relationship, the linear relationship includes a linear relationship other than that the output is equal to the input.

The methods according to some embodiments of the present disclosure employ a linear connection unit in a supernet, compared with the use of the direct-connected unit, the representation capability of the sub-network can be effectively improved, the stability of the network indicators of the sub-network including the linear connection unit in the supernet is maintained, and the network indicators of the sub-network is prevented from decreasing rapidly during the depth adjustment process.

In some embodiments, the method further includes setting linear parameters of each linear connection unit in the supernet;

The setting linear parameters of each linear connection unit in the supernet can include one of the following modes:
1. setting linear parameters of all linear connection units in the supernet to constants;
2. setting linear parameters of a part of linear connection units in the supernet to constants, and setting linear parameters of the other linear connection units as variables;
3. setting linear parameters of all linear connection units in the supernet as variables.

In some embodiments, the linear parameters include at least one of the following parameters: slope, first coordinate axis displacement and second coordinate axis displacement. For example, the linear relationship is y(x)=k(x+a)+b, where k is the slope, a is the first coordinate axis displacement and b is the second coordinate axis displacement.

In some embodiments, the values of each linear parameter of each linear connection unit whose linear parameters are constant in the supernet are the same or different. For example, the linear relationship of all linear connection units in the supernet is y(x)=2(x+1)+3. For another example, the linear relationship of a part of the linear connection units in the supernet is y(x)=2(x+1)+3, and the linear relationship of the other linear connection units is y(x)=1.5x. For another example, the linear relationship of a part of the linear connection units in the supernet is y(x)=2(x+1)+3, the linear relationship of the another part of the linear connection units is y(x)=1.5x, and the linear relationship of other part linear connection units is y(x)=2x+3 and the like.

In some embodiments, initial values of linear parameters of each linear connection unit whose linear parameters are variables in the supernet are set. The linear parameters of each linear connection unit are updated when training the sub-networks in the supernet.

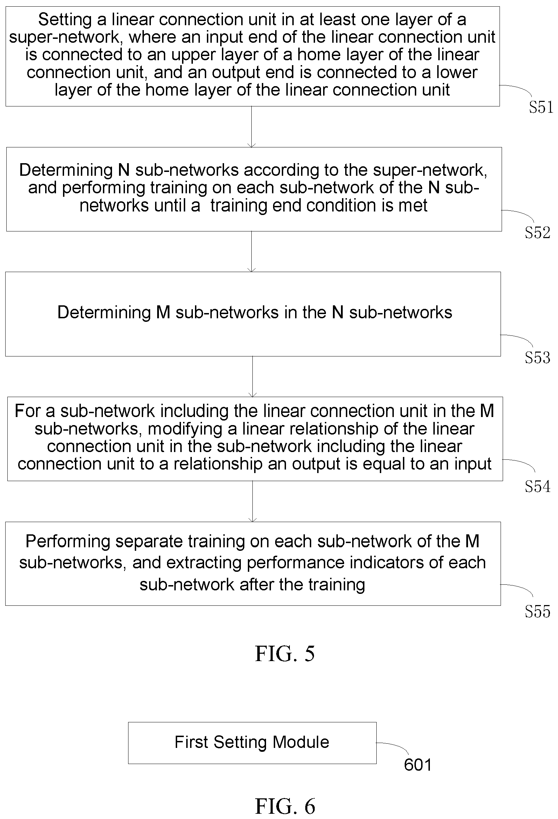

FIG. 5 is a flow chart showing a method of using a supernet according to some embodiments. The method includes:
Step S51, setting a linear connection unit in at least one layer of the supernet, an input end of the linear connection unit is connected to an upper layer of the home layer of the linear connection unit, and an output end is connected to a lower layer of the home layer of the linear connection unit;
Step S52, determining N sub-networks according to the supernet, and performing training on each sub-network of the N sub-networks until a training end condition is met;
Step S53, determining M sub-networks in the N sub-networks;
Step S54: for a sub-network including the linear connection unit in the M sub-networks, modifying a linear relationship of the linear connection units in the sub-network including the linear connection unit to relationship that an output is equal to an input;
Step S55: performing separate training on each sub-network of the M sub-networks, and extracting performance indicators of each sub-network after the training ends;

N and M are integers greater than 1, and M is less than or equal to N.

The present method uses a linear connection unit in a supernet, compared with the use of the direct-connected unit, the representation capability of the sub-network can be effectively improved, the stability of the network indicators of the sub-network including the linear connection unit in the supernet is maintained, and the network indicators of the sub-network is prevented from decreasing rapidly during the depth adjustment process. Specifically, after a linear connection unit is used when training each sub-network of the N sub-networks, and after the linear relationship of the linear connection units in the sub-network including the linear connection unit is modified to the relationship that the output is equal to the input when training each sub-network of the M sub-networks, the network indicators of the sub-network remain basically unchanged during the depth adjustment process.

In some embodiments, determining the M sub-networks in the N sub-network includes: calculating the network indicators of the N sub-networks, and selecting M sub-networks with the highest quality index of the network indicators from the N sub-networks. Network indicators include, but are not limited to, accuracy rate, loss value, verification accuracy rate, verification loss, average absolute error and so on.

In some embodiments, the present method further includes: setting linear parameters of each linear connection unit in the supernet;
The setting linear parameters of each linear connection unit in the supernet includes one of the following modes:
setting linear parameters of all linear connection units in the supernet to constants;
setting linear parameters of a part of linear connection units in the supernet to constants, and setting linear parameters of other linear connection units as variables;
setting linear parameters of all linear connection units in the supernet as variables.

When the actual values of the linear parameters of the linear connection unit are variables, the linear parameters of each linear connection unit are updated while training each sub-network of the N sub-networks.

In some embodiments, the linear parameters include at least one of the following parameters: slope, first coordinate axis displacement and second coordinate axis displacement. For example, the linear relationship is y(x)=k(x+a)+b, where k is the slope, a is the first coordinate axis displacement and b is the second coordinate axis displacement.

In some embodiments, the values of each linear parameter of each linear connection unit whose linear parameters are constant in the supernet are the same or different. For example, the linear relationship of all linear connection units in the supernet is all y(x)=2(x+1)+3. For another example, the linear relationship of a part of the linear connection units in the supernet is y(x)=2(x+1)+3, and the linear relationship of the other linear connection units is y(x)=1.5x. For another example, the linear relationship of a part of the linear connection units in the supernet is y(x)=2(x+1)+3, the linear relationship of another part of the linear connection units is y(x)=1.5x, and the linear relationship of the other part linear connection units is y(x)=2x+3 and the like.

FIG. 6 is a structure view showing a supernet construction apparatus according to some embodiments, and the supernet construction apparatus includes:
a first setting module, configured to set a linear connection unit in at least one layer of the supernet, an input end of the linear connection unit is connected to an upper layer of the home layer of the linear connection unit, and an output end is connected to a lower layer of the home layer of the linear connection unit; the output and the input of the linear connection unit form a linear relationship, and the linear relationship includes a linear relationship other than that the output is equal to the input.

The various circuits, device components, units, blocks, or portions may have modular configurations, or are composed of discrete components, but nonetheless can be referred to as "units," "modules," or "portions" in general. In other words, the "circuits," "components," "modules," "blocks," "portions," or "units" referred to herein may or may not be in modular forms.

In some embodiments, the supernet construction apparatus further includes:
A second setting module, configured to set linear parameters of each linear connection unit in the supernet;
The setting linear parameters of each linear connection unit in the supernet includes one of the following modes:
   setting linear parameters of all linear connection units in the supernet to constants;
   setting linear parameters of a part of linear connection units in the supernet to constants, and linear parameters of the other linear connection units as variables;
   setting linear parameters of all linear connection units in the supernet as variables.

The linear parameters include at least one of the following parameters: slope, first coordinate axis displacement and second coordinate axis displacement.

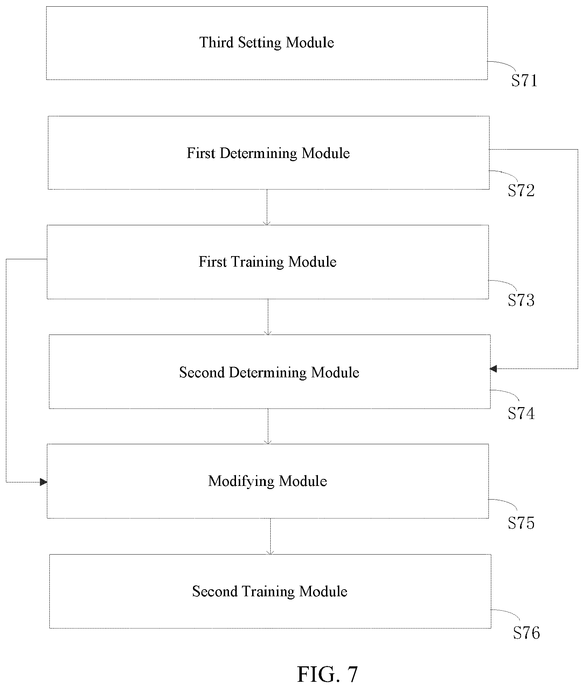

FIG. 7 is a block diagram showing an apparatus of using a supernet according to some embodiments, the supernet construction apparatus includes:
a third setting module, configured to set a linear connection unit in at least one layer of the supernet, an input end of the linear connection unit is connected to an upper layer of the home layer of the linear connection unit, and an output end is connected to a lower layer of the home layer of the linear connection unit; the output and the input of the linear connection unit form a linear relationship;
a first determining module, configured to determine N sub-networks according to the supernet;
a first training module, configured to perform training on each sub-network of the N sub-networks until a training end condition is met;
a second determining module, configured to determine M sub-networks in the N sub-network;
a modifying module, configured to, for a sub-network including the linear connection unit in the M sub-networks, modify a linear relationship of the linear connection units in the sub-network including the linear connection unit to a relationship that an output is equal to an input;
a second training module, performing separate training on each sub-network of the M sub-networks, and extracting performance indicators of each sub-network after the training ends;
N and M are integers greater than 1, and M is less than or equal to N.

In some embodiments, the second determining module includes:
a calculation module, configured to calculate network indicators of the N sub-networks;
a selection module, configured to select, from the N sub-networks, the M sub-networks with the highest quality index of the network indicator.

In some embodiments, the supernet construction apparatus further includes a fourth setting module which configured to set linear parameters of each linear connection unit in the supernet;
The setting linear parameters of each linear connection unit in the supernet includes one of the following modes:
setting linear parameters of all linear connection units in the supernet to constants;
setting linear parameters of a part of linear connection units in the supernet to constants, and linear parameters of other linear connection units as variables;
setting linear parameters of all linear connection units in the supernet as variables.

In some embodiments, the first training module is further configured to, when the actual value of the linear parameter of the linear connection unit is a variable, update the linear parameters of each linear connection unit while training each sub-network of the N sub-networks.

In some embodiments, the linear parameters include at least one of the following parameters: slope, first coordinate axis displacement and second coordinate axis displacement.

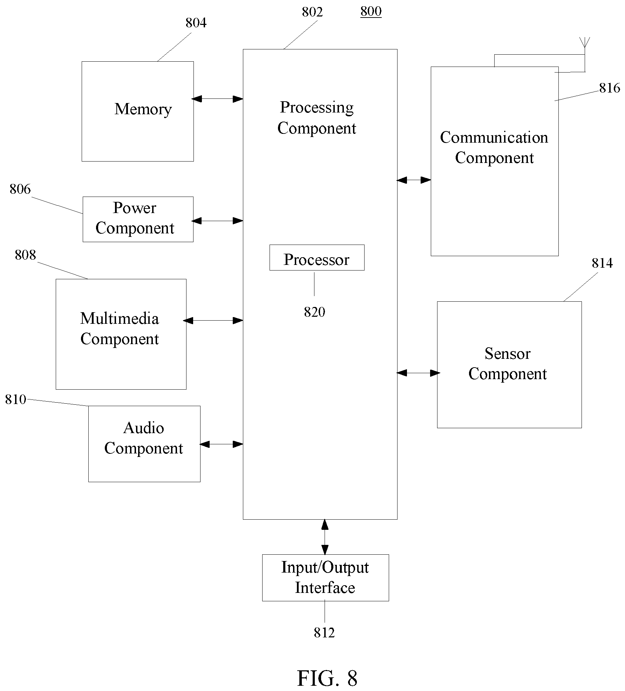

FIG. 8 is a block diagram showing a construction apparatus or using apparatus 800 of a supernet according to some embodiments. For example, apparatus 800 can be a mobile phone, a computer, a digital broadcast terminal, a message sending and receiving device, a gaming console, a tablet device, a medical device, a fitness device, a personal digital assistant, and the like.

Referring to FIG. 8, apparatus 800 can include one or more of the following components: processing component 802, memory 804, power component 806, multimedia component 808, audio component 810, input/output (I/O) interface 812, sensor component 814 and communication component 816.

Processing component 802 typically controls the overall operation of the apparatus 800, such as operations associated with display, telephone calls, data communications, camera operations and recording operations. Processing component 802 can include one or more processors 820 to execute instructions to perform all or part of the steps of the above described methods. Moreover, the processing component 802 can include one or more modules to facilitate the interaction between the processing component 802 and the other components. For example, the processing component 802 can include a multimedia module to facilitate the interaction between the multimedia component 808 and the processing component 802.

The memory 804 is configured to store various types of data to support the operation at device 800. Examples of such data include instructions of any application or method, contact data, phone book data, messages, pictures, videos and the like operating on the apparatus 800. The memory 804 can be implemented by any type of volatile or non-volatile storage device or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, disk or optical Disk.

The power component 806 provides power for various components of the apparatus 800. The power component 806 can include a power management system, one or more power sources and other components associated with generating, managing and distributing power for device 800.

The multimedia component 808 includes a screen providing an output interface between the apparatus 800 and the user. In some embodiments, the screen can include a liquid crystal display (LCD) and a touch panel (TP). In some embodiments, an organic light-emitting diode (OLED) display or other types of displays can be adopted.

If the screen includes a touch panel, the screen can be implemented as a touch screen to receive input signals from the user. The touch panel includes one or more touch sensors to sense touches, slides, and gestures on the touch panel. The touch sensor can sense not only the boundary of the touch or sliding action, but also the duration and pressure associated with the touch or slide operation. In some embodiments, the multimedia component 808 includes a front camera and/or a rear camera. When the device 800 is in an operation mode, such as a shooting mode or a video mode, the front camera and/or the rear camera can receive external multimedia data. Each front and rear camera can be a fixed optical lens system or have focal length and optical zoom capabilities.

The audio component 810 is configured to output and/or input an audio signal. For example, the audio component 810 includes a microphone (MIC) that is configured to receive an external audio signal when the apparatus 800 is in an operational mode, such as a call mode, a recording mode and a voice recognition mode. The received audio signal can be further stored in the memory 804 or transmitted via communication component 816. In some embodiments, the audio component 810 further includes a speaker for outputting an audio signal.

The I/O interface 812 provides an interface between the processing component 802 and the peripheral interface module, and the above described peripheral interface module may be a keyboard, a click wheel, a button, or the like. These buttons may include, but are not limited to, a home button, a volume button, a start button and a lock button.

The sensor assembly 814 includes one or more sensors providing a status assessment of various aspects for apparatus 800. For example, the sensor component 814 can detect the on/off state, the relative positioning of components of device 800. For example, the component is a display and a keypad of the apparatus 800. The sensor assembly 814 can also detect changes in position of one component of the apparatus 800 or the apparatus 800, the presence or absence of the user contact with the apparatus 800, orientation or acceleration/deceleration of the apparatus 800, and temperature changes of the apparatus 800. The sensor assembly 814 can include a proximity sensor configured to detect the presence of nearby objects without any physical contact. The Sensor assembly 814 may also include a light sensor, such as a CMOS or CCD image sensor configured to use in imaging applications. In some embodiments, the sensor assembly 814 can also include an acceleration sensor, a gyro sensor, a magnetic sensor, a pressure sensor or a temperature sensor.

The communication component 816 is configured to facilitate wired or wireless communication between the apparatus 800 and the other devices. The apparatus 800 can access a wireless network based on a communication standard, such as Wi-Fi, 2G, 3G, 4G, or 5G, or a combination thereof. In one exemplary embodiment, the communication component 816 receives broadcast signals or broadcast associated information from an external broadcast management system via a broadcast channel. In one exemplary embodiment, the communication component 816 further includes a near field communication (NFC) module to facilitate short range communication. For example, the NFC module can be implemented based on radio frequency identification (RFID) technology, infrared data association (IrDA) technology, ultra-wideband (UWB) technology, Bluetooth (BT) technology and other technologies.

In some embodiments, the apparatus 800 may be implemented by one or more application specific integrated circuits (ASIC), digital signal processors (DSP), digital signal processing device (DSPD), programmable logic device (PLD), field programmable gate array (FPGA), controller, microcontroller, microprocessors or other electronic components, to perform the above described method.

In some embodiments, there is also provided a non-transitory computer readable storage medium including the instructions, such as a memory 804 including instructions, the above described instructions can be executed by the processor 820 of the apparatus 800 to perform the above described method. For example, the non-transitory computer readable storage medium may be a ROM, a random-access memory (RAM), a CD-ROM, a magnetic tape, a floppy disk, an optical data storage device and the like.

In some embodiments, there is also provided a non-transitory computer readable storage medium including the instructions, such as a memory including instructions, the above described instructions can be executed by the processor 920 of the apparatus 900 to perform the above described method. For example, the non-transitory computer readable storage medium may be a ROM, a random-access memory (RAM), a CD-ROM, a magnetic tape, a floppy disk, an optical data storage device and the like.

Those of ordinary skill in the art will understand that the above described modules/units can each be implemented by hardware, or software, or a combination of hardware and software. Those of ordinary skill in the art will also understand that multiple ones of the above described modules/units may be combined as one module/unit, and each of the above described modules/units may be further divided into a plurality of sub-modules/sub-units.

In the present disclosure, it is to be understood that the terms "lower," "upper," "center," "longitudinal," "transverse," "length," "width," "thickness," "upper," "lower," "front," "back," "left," "right," "vertical," "horizontal," "top," "bottom," "inside," "outside," "clockwise," "counterclockwise," "axial," "radial," "circumferential," "column," "row," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, the terms "installed," "connected," "coupled," "fixed" and the like shall be understood broadly, and may be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the present disclosure, a first element being "on," "over," or "below" a second element may indicate direct contact between the first and second elements, without contact, or indirect through an intermediate medium, unless otherwise explicitly stated and defined.

Moreover, a first element being "above," "over," or "at an upper surface of' a second element may indicate that the first element is directly above the second element, or merely that the first element is at a level higher than the second element. The first element "below," "underneath," or "at a lower surface of' the second element may indicate that the first element is directly below the second element, or merely that the first element is at a level lower than the second feature. The first and second elements may or may not be in contact with each other.

In the description of the present disclosure, the terms "one embodiment," "some embodiments," "example," "specific example," or "some examples," and the like may indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described may be combined in a suitable manner in any one or more embodiments or examples. In addition, various embodiments or examples described in the specification, as well as features of various embodiments or examples, may be combined and reorganized.

In some embodiments, the control and/or interface software or app can be provided in a form of a non-transitory computer-readable storage medium having instructions stored thereon is further provided. For example, the non-transitory computer-readable storage medium may be a Read-Only Memory (ROM), a Random-Access Memory (RAM), a Compact Disc Read-Only Memory (CD-ROM), a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more modules of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium may be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures. For example, the devices can be controlled remotely through the Internet, on a smart phone, a tablet computer or other types of computers, with a web-based graphic user interface (GUI).

A computer program (also known as a program, software, software application, app, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a mark-up language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode) display, other flexible configuration, or any other monitor for displaying information to the user and a keyboard, a pointing device, e.g., a mouse, trackball, etc., or a touch screen, touch pad, etc., by which the user can provide input to the computer.

Other types of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In an example, a user can speak commands to the audio processing device, to perform various operations.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombinations.

Moreover, although features may be described above as acting in certain combinations and even initially claimed as such, one or more features from a claimed combination can in some cases be excised from the combination, and the claimed combination may be directed to a subcombination or variations of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing may be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the scope of the disclosure defined in the following claims, the scope of which is to be accorded the broadest interpretation so as to encompass such modifications and equivalent structures.

## Claims

1. A supernet construction method, comprising:
Setting(41) a linear connection unit in at least one layer of a supernet;
wherein an input end of the linear connection unit is connected to an upper layer of a home layer of the linear connection unit, and an output end is connected to a lower layer of the home layer of the linear connection unit;
wherein an output and an input of the linear connection unit form a linear relationship; and
the linear relationship comprises a linear relationship other than that the output is equal to the input of the linear connection unit.

2. The supernet construction method of claim 1, wherein the method further comprises:
setting linear parameters of each linear connection unit in the supernet;
wherein the setting each linear parameter of each linear connection unit in the supernet comprises at least one of:
setting the linear parameters of all linear connection units in the supernet to be constants;
setting the linear parameters of a part of the linear connection units in the supernet to be constants, and the linear parameters of the other linear connection units as variables; or
setting the linear parameters of all linear connection units in the supernet as variables.

3. The supernet construction method of claim 2, wherein:
the linear parameters comprise at least one of: slope, first coordinate axis displacement, or second coordinate axis displacement; and
the method further comprises increasing a representation capability of a sub-network and maintaining stability of network indicators of the sub-network including the linear connection unit in the supernet, and wherein the network indicators of the sub-network is prevented from decreasing rapidly during a depth adjustment process as a result of the setting a linear connection unit.

4. A method of using a supernet, comprising:
Setting(51) a linear connection unit in at least one layer of a supernet, wherein an input end of the linear connection unit is connected to an upper layer of a home layer of the linear connection unit, and an output end is connected to a lower layer of the home layer of the linear connection unit;
Determining(52) N sub-networks according to the supernet, and performing training on each sub-network of the N sub-networks until a training end condition is met;
Determining(53) M sub-networks in the N sub-networks;
for a sub-network comprising the linear connection unit in the M sub-networks, modifying(54) a linear relationship of the linear connection unit in the sub-network comprising the linear connection unit to a relationship that an output is equal to an input;
performing(55) separate training on each sub-network of the M sub-networks, and extracting performance indicators of each sub-network after the training ends; and
N and M are integers greater than 1, and M is less than or equal to N.

5. The supernet using method of claim 4, wherein the determining M sub-networks in the N sub-networks comprises:
calculating the network indicators of the N sub-networks, and selecting M sub-networks with the highest quality index of the network indicators from the N sub-networks;
or
the method of claim further comprising:
setting linear parameters of each linear connection unit in the supernet;
wherein the setting linear parameters of each linear connection unit in the supernet comprises at least one:
setting the linear parameters of all linear connection units in the supernet to constants;
setting the linear parameters of a part of the linear connection units in the supernet to be constants, and setting the linear parameters of the other linear connection units as variables; or
setting the linear parameters of all linear connection units in the supernet as variables.

6. The supernet using method of claim 5, further comprising:
in a case that the actual value of the linear parameters of the linear connection unit are variables, the linear parameters of each linear connection unit are updated while training each sub-network of the N sub-networks;
or
wherein the linear parameters comprise at least one of: slope, first coordinate axis displacement, or second coordinate axis displacement.

7. The supernet construction apparatus, comprising:
a first setting module(601), configured to set a linear connection unit in at least one layer of a supernet, an input end of the linear connection unit is connected to an upper layer of a home layer of the linear connection unit, and an output end is connected to a lower layer of the home layer of the linear connection unit; wherein an output and an input of the linear connection unit form a linear relationship, the linear relationship comprises a linear relationship other than that the output is equal to the input.

8. The supernet construction apparatus of claim 7, wherein the apparatus further comprises:
a second setting module, configured to set the linear parameters of each linear connection units in the supernet;
the setting each linear parameter of each linear connection unit in the supernet comprises one of the following modes:
setting the linear parameters of all linear connection units in the supernet to constants;
setting the linear parameters of a part of the linear connection units in the supernet to constants, and setting the linear parameters of the other linear connection units as variables;
setting the linear parameters of all linear connection units in the supernet as variables.

9. The supernet construction apparatus of claim 8, wherein the linear parameters comprise at least one of the following parameters: slope, first coordinate axis displacement and second coordinate axis displacement.

10. A supernet using apparatus, comprising:
a third setting module(71), configured to set a linear connection unit in at least one layer of the supernet, an input end of the linear connection unit is connected to an upper layer of a home layer of the linear connection unit, and an output end is connected to a lower layer of the home layer of the linear connection unit; an output and an input of the linear connection unit form a linear relationship;
a first determining module(72), configured to determine N sub-networks according to the supernet;
a first training module(73), configured to perform training on each sub-network of the N sub-networks until a training end condition is met;
a second determining module(74), configured to determine M sub-networks in the N sub-network;
a modifying module(75), configured to, for a sub-network comprising the linear connection unit in the M sub-networks, modify a linear relationship of the linear connection unit in the sub-network comprising the linear connection unit to a relationship that an output is equal to an input;
a second training module(76), configured to perform separate training on each sub-network of the M sub-networks, and extract performance indicators of each sub-network after the training ends;
N and M are integers greater than 1, and M is less than or equal to N.

11. The supernet using apparatus of claim 10, wherein the second determining module comprises:
a calculation module, configured to calculate the network indicators of the N sub-networks;
a selection module, configured to select, from the N sub-networks, the M sub-networks with the highest quality index of the network indicators;
or
wherein the apparatus further comprises a fourth setting module, the fourth setting module configured to set the linear parameters of each linear connection units in the supernet; the setting each linear parameter of each linear connection unit in the supernet comprises one of the following modes:
setting the linear parameters of all linear connection units in the supernet to constants;
setting the linear parameters of a part of the linear connection units in the supernet to constants, and setting the linear parameters of the other linear connection units as variables;
setting the linear parameters of all linear connection units in the supernet as variables.

12. The supernet using apparatus of claim 11, wherein the first training module is further configured to, when the actual value of the linear parameter of the linear connection unit is a variable, update the linear parameters of each linear connection unit while training each sub-network of the N sub-networks;
or
wherein the linear parameters comprise at least one of the following parameters: slope, first coordinate axis displacement and second coordinate axis displacement.

13. A non-transitory computer-readable storage medium having instructions stored thereon for execution by a processing circuit of a mobile terminal, enabling the mobile terminal to perform a supernet construction method, the method comprising:
setting a linear connection unit in at least one layer of a supernet, wherein an input end of the linear connection unit is connected to an upper layer of a home layer of the linear connection unit, and an output end is connected to a lower layer of the home layer of the linear connection unit; an output and an input of the linear connection unit form a linear relationship.

14. A non-transitory computer-readable storage medium having instructions stored thereon for execution by a processing circuit of a mobile terminal, enabling the mobile terminal to perform the method of using a supernet , the method comprising:
setting a linear connection unit in at least one layer of a supernet, wherein an input end of the linear connection unit is connected to an upper layer of a home layer of the linear connection unit, and an output end is connected to a lower layer of the home layer of the linear connection unit;
determining N sub-networks according to the supernet, and performing training on each sub-network of the N sub-networks until a corresponding training end condition is met;
determining M sub-networks in the N sub-networks;
for a sub-network comprising the linear connection unit in the M sub-networks, modifying a linear relationship of the linear connection unit in the sub-network comprising the linear connection unit to a relationship that an output is equal to an input;
performing separate training on each sub-network of the M sub-networks, and extracting performance indicators of each sub-network after the training ends;
N and M are integers greater than 1, and M is less than or equal to N.

15. A computer program, which when executing on a processor, performs a method according to any one of claims 1 to 6.
